# DEMANDE DE BREVET EUROPEEN

(11) **EP 4 086 819 A1**
(43) Date de publication de la demande: **09.11.2022**
(21) Numéro de dépôt: 22158057.4
(22) Date de dépôt: 22.02.2022
(51) Int. Cl.: G06N 3/08, G06N 3/04, G08G 5/00

(54) **PROCÉDÉ D'APPRENTISSAGE D'UNE INTELLIGENCE ARTIFICIELLE SUPERVISÉE DESTINÉE À IDENTIFIER UN OBJET PRÉDETERMINÉ DANS L'ENVIRONNEMENT D'UN AÉRONEF**

(30) Priorité: 25.03.2021 FR 2102995
(71) Demandeur: Airbus Helicopters, 13725 Marignane Cedex (FR)
(72) Inventeur: FILIAS, François-Xavier, 13330 PELISSANNE (FR); PIRE, Richard, 13800 ISTRES (FR)
(74) Mandataire: GPI Brevets

(57) **Abrégé**

La présente invention concerne un procédé d'apprentissage d'une intelligence artificielle destinée à identifier un objet prédéterminé (20,25) dans l'environnement d'un aéronef en vol. Ledit procédé comporte des étapes d'identification d'au moins un objet prédéterminé (20,25) sur des représentations représentant au moins un objet prédéterminé (20,25) et son environnement, d'établissement d'un jeu d'apprentissage et d'un jeu de validation, ledit jeu d'apprentissage et ledit jeu de validation comprenant plusieurs représentations parmi lesdites représentations représentant au moins un objet prédéterminé (20,25), d'apprentissage de ladite intelligence artificielle avec ledit jeu d'apprentissage et de validation de ladite intelligence artificielle avec ledit jeu de validation. Ladite intelligence artificielle peut ensuite être utilisée dans un procédé d'aide à l'atterrissage d'un aéronef (1) pour l'identification d'une hélisurface (20,25) où effectuer ledit atterrissage. Ladite intelligence artificielle peut aussi être utilisée dans un procédé d'évitement d'un câble pour l'identification de câbles situés sur ou à proximité de la trajectoire dudit aéronef.

## Description

La présente invention se rapporte au domaine des aides au pilotage des aéronefs. De telles aides peuvent par exemple être destinées à aider un pilote lors d'un atterrissage d'un giravion en facilitant notamment l'identification d'une zone de poser, le guidage de l'aéronef vers la zone de poser et/ou son atterrissage sur une telle zone de poser. De telles aides peuvent encore être apportées pour identifier des obstacles, tels que des câbles, et les éviter.

La présente invention concerne un procédé d'apprentissage d'une intelligence artificielle supervisée destinée à identifier un objet prédéterminé, par exemple une hélisurface ou un câble, dans l'environnement d'un aéronef. La présente invention concerne aussi un système et un procédé d'aide à l'atterrissage d'un aéronef. La présente invention concerne encore un système et un procédé d'aide à l'évitement d'un câble avec un aéronef.

Un équipage d'un aéronef peut avoir des difficultés pour identifier une zone de poser lorsque, par exemple, cette zone de poser est agencée sur un bâtiment, éventuellement mobile. Un tel bâtiment peut notamment prendre la forme d'un véhicule tel qu'un navire, une barge ou une plateforme pouvant comporter plusieurs zones de poser distinctes.

L'identification d'une zone de poser peut se révéler encore plus complexe lorsque la zone de poser se situe sur une zone étendue comprenant par exemple un ensemble de plusieurs bâtiments ou de plateformes géographiquement proches les uns des autres.

De plus, une zone de poser peut parfois se trouver au sein d'un environnement encombré et/ou peut présenter des dimensions restreintes vis-à-vis de cet environnement.

Par exemple, une zone de poser d'une installation de forage en mer présente parfois une taille réduite. De plus, une telle zone de poser peut se trouver à proximité d'obstacles, comme des structures métalliques, une grue...

En conséquence, l'équipage d'un aéronef doit en pratique prendre du temps pour faire une reconnaissance de la zone afin d'identifier la zone de poser. Ce temps peut être d'autant plus important si la zone comporte plusieurs bâtiments et/ou plusieurs zones de poser. La charge de travail de l'équipage est alors élevée. De plus, l'aéronef doit alors embarquer une quantité de carburant supplémentaire pour prendre en compte le temps de cette opération de reconnaissance.

Une zone de poser peut être désignée par exemple par le terme « héliport » lorsqu'elles sont situées sur terre et plus généralement par le terme « hélisurface ». Une hélisurface peut notamment être une aire d'atterrissage située par exemple sur un navire ou bien sur une plateforme maritime fixe ou flottante telle qu'une installation de forage en mer. Une zone de poser peut aussi être désignée par le terme« helipad » en langue anglaise.

Toute hélisurface possède des caractéristiques visuelles qui permettent à un pilote de l'identifier lorsque les conditions de visibilité suffisantes sont réunies. Les hélisurfaces peuvent être de formes variées, par exemple de forme carré, ronde ou triangulaire, avoir des couleurs particulières, par exemple jaune ou blanc, comporter éventuellement une lettre « H » inscrite en son centre et/ou un cercle. Les hélisurfaces peuvent aussi être illuminées. Les dimensions de la lettre « H » et/ou du cercle inscrit sur une hélisurface peuvent notamment répondre à une norme prescrite dans le document "CAP 437 Standards for Offshore Helicopter Landing Areas".

Pour faciliter l'identification d'une hélisurface et l'atterrissage sur cette hélisurface, un aéronef peut utiliser un procédé ou un dispositif d'aide au pilotage.

Par exemple, le document FR 3062720 décrit un procédé qui préconise de capturer des images d'une hélisurface, de calculer avec un premier système d'imagerie une position de l'hélisurface à partir au moins d'une image captée, de déterminer avec un système de pilotage automatique une position courante de l'hélisurface à l'instant courant, de vérifier avec un deuxième système d'imagerie la présence de l'hélisurface à cette position courante dans une image captée, et de générer une alarme si cette présence n'est pas vérifiée.

Le document FR 3053821 décrit un procédé et un dispositif d'aide au pilotage d'un giravion pour permettre de guider un giravion jusqu'à une zone d'atterrissage sur une hélisurface. Ce dispositif comporte notamment une caméra pour capter une pluralité d'images de l'environnement du giravion suivant une ligne de visée ainsi que des moyens de traitement d'images pour identifier dans au moins une image au moins une hélisurface recherchée. Le procédé mis en œuvre par ce dispositif comporte une étape de présélection d'un type d'hélisurface, une étape d'acquisition d'images de l'environnement du giravion, une étape de traitement pour identifier dans au moins une image au moins une hélisurface correspondant au type d'hélisurface présélectionné, une étape d'affichage pour afficher une image représentative de ladite au moins une hélisurface, une étape de sélection pour sélectionner une hélisurface parmi ladite au moins une hélisurface affichée, et une étape de commande pour générer une consigne de commande permettant de piloter automatiquement le giravion en direction de l'hélisurface sélectionnée.

Par ailleurs, une ligne d'horizon peut tout d'abord être détectée dans le cadre de traitement d'images à l'aide d'une méthode dite « par gradient » en utilisant un « filtre de Sobel » vertical sur au moins une image captée. Ensuite, une « transformée de Hough » peut être appliquée pour détecter par exemple des points alignés ou des formes géométriques simples dans une image complexe afin d'identifier par exemple la lettre « H » ou une partie d'un cercle inscrit sur l'hélisurface.

Le document FR 3089038 décrit un procédé d'apprentissage d'un réseau de neurones embarqué dans un avion afin d'aider un pilote de l'avion pour un atterrissage sur une piste d'atterrissage en conditions de visibilité réduite. Des images radar de plusieurs pistes d'atterrissage sur lesquelles sont identifiées les pistes d'atterrissage sont captées par temps clair par une flotte d'avions. Ces images radar forment une base de données utilisée pour l'apprentissage du réseau de neurones. Le réseau de neurones est ensuite embarqué dans les avions et permet d'afficher des informations relatives à la position de la piste d'atterrissage visée en surimpression d'une vision de l'environnement extérieur, voire de commander, à l'aide d'un système de pilotage automatique, l'atterrissage de l'avion.

En outre, un équipage d'un aéronef doit également surveiller la présence éventuelle de câbles présents sur la trajectoire de vol de l'aéronef ou à proximité de cette trajectoire. Cependant, un équipage d'un aéronef peut avoir des difficultés pour détecter un tel câble en raison de sa géométrie filiforme. Cette détection est pourtant importante afin de modifier si nécessaire la trajectoire de l'aéronef pour passer à une distance suffisante d'un câble détecté.

Le document FR 2888944 décrit un procédé permettant de détecter la présence d'un objet filiforme suspendu, tel un câble, dans le champ de vision d'un télémètre embarqué à bord d'un aéronef. Ce procédé peut utiliser une transformée de Hough pour détecter dans un plan horizontal de ce champ de vision un ou plusieurs points alignés. Ensuite, une forme en chaînette peut être identifiée à partir d'un groupe de points détectés et des paramètres de cette chaînette sont calculés afin de confirmer ou infirmer la présence d'un objet filiforme suspendu.

Toutefois, les procédés de l'art antérieur, concernant aussi bien l'identification d'une hélisurface que d'un câble, nécessitent des temps de calculs non négligeables, voire importants, pour être certain de détecter et d'identifier les objets prédéterminés présents dans l'environnement.

Par ailleurs, le document WO 2020/152060 décrit un procédé d'apprentissage d'un réseau de neurones. Selon ce procédé, un dispositif d'évaluation et un réseau de neurones fonctionnent en parallèle. Le réseau de neurones est destiné à fournir une fonctionnalité prédéterminée de traitement de données d'entrée et le dispositif d'évaluation est destiné à fournir la même fonctionnalité prédéterminée. Une comparaison des données de sortie du dispositif d'évaluation et du réseau de neurones permet de déterminer la qualité des résultats du réseau de neurones par rapport aux résultats du dispositif d'évaluation. Un dispositif de rétroaction est prévu pour rendre compte au réseau de neurones de la qualité des données de sortie déterminées par le dispositif de comparaison afin de provoquer un effet d'entraînement pour le réseau de neurones et donc une amélioration de la qualité des résultats du réseau de neurones.

La publication: « Runway Détection and Localization in Aerial Images using Deep Learning » de AKBAR JAVERIA et All, du 2 décembre 2019 (IEEE, XP033683070) décrit une méthode de détection par apprentissage de type « deep learning » de pistes d'atterrissage dans des images aériennes. Selon cette méthode, une piste d'atterrissage peut être identifiée par la détection de segments de droites dans une image en appliquant une transformée de Hough ou une approche dite LSD pour « Line Segment Detector ». Un réseau de neurones convolutif (CNN) destiné à la détection des pistes d'atterrissage utilise une base de données d'images aériennes comportant différentes pistes d'atterrissage pour son apprentissage et pour sa validation.

La publication « A Review of Road Extraction from Remote Sensing Images » de WANG WEIXING et All, du 17 mars 2016 (Journal of Traffic and Tranportation Engineering, XP055829931) décrit différentes méthodes pour extraire des routes présentes dans des images. Ces méthodes peuvent utiliser les caractéristiques géométriques, les caractéristiques photométriques ou encore les caractéristiques de texture des routes. Ces méthodes utilisent par exemple un réseau de neurones artificiel (ANN), un réseau de neurones BP (rétropropagation), une méthode d'apprentissage supervisé (SVM)... Les contours d'une route peuvent être identifiés dans une image par exemple par la méthode dite « snake », une méthode basée sur les moindres carrés par exemple.

Le document CN 109 543 595 décrit une méthode de détection de câbles à l'aide d'un réseau de neurones convolutif. Après un cycle d'apprentissage, le réseau de neurones convolutif analyse des images en temps réel et extrait les obstacles potentiels, par exemple des câbles, et les affiche, fournissant ainsi une alerte pour un pilote d'un hélicoptère.

Le document US 2017/0045894 décrit plusieurs procédures ou systèmes permettant un atterrissage autonome de drones. Ce document décrit par exemple l'utilisation d'un algorithme de vision par ordinateur configuré pour identifier et suivre plusieurs zones d'atterrissage dans un environnement en détectant des zones d'atterrissage, par l'intermédiaire d'un cercle, d'un repère, de la lettre « H » par exemple. Un réseau de neurones et/ou des approches similaires peuvent être utilisés pour traiter les données afin d'identifier les zones d'atterrissage disponibles. Ces procédés utilisent un ensemble fini et spécifique de symboles d'identification, réduisant ainsi toutes les exigences traditionnelles d'apprentissage.

La présente invention a alors pour but de proposer un procédé et un système alternatifs pour détecter et identifier des objets prédéterminés présents dans l'environnement d'un aéronef avec des temps de calculs très brefs de sorte à obtenir l'identification d'au moins un objet prédéterminé sensiblement en temps réel.

La présente invention a par exemple pour objet un procédé d'apprentissage d'une intelligence artificielle supervisée destinée à identifier un objet prédéterminé dans l'environnement d'un aéronef en vol tel que revendiqué.

La présente invention a aussi pour objet un procédé et un système d'aide à l'atterrissage d'un aéronef ainsi qu'un aéronef disposant d'un tel système tels que revendiqués. La présente invention a enfin pour objet un procédé et un système d'aide à l'évitement d'un câble avec un aéronef ainsi qu'un aéronef disposant d'un tel système tels que revendiqués.

Tout d'abord, la présente invention a pour objet un procédé d'apprentissage d'une intelligence artificielle supervisée destinée à identifier un objet prédéterminé dans l'environnement d'un aéronef en vol, des caractéristiques géométriques de cet objet prédéterminé étant préalablement connues.

Le procédé selon l'invention est remarquable en ce qu'il comporte les étapes suivantes réalisées à l'aide d'un calculateur :
- identification d'au moins un objet prédéterminé par traitement de représentations représentant au moins un objet prédéterminé et au moins une partie de son environnement, lesdites représentations comportant plusieurs représentations d'un même objet prédéterminé avec des valeurs différentes d'au moins un paramètre caractéristique de ladite représentation,
- établissement d'un jeu d'apprentissage et d'un jeu de validation pour alimenter l'intelligence artificielle supervisée comprenant les sous-étapes suivantes :
   ∘ sélection de plusieurs représentations parmi lesdites représentations identifiées pour former le jeu d'apprentissage, et
   ∘ sélection de plusieurs représentations parmi lesdites représentations identifiées pour former le jeu de validation,
- apprentissage pour l'apprentissage de l'intelligence artificielle supervisée, en utilisant au moins le jeu d'apprentissage et
- validation pour la validation de l'intelligence artificielle supervisée en utilisant au moins le jeu de validation.

De la sorte, l'intelligence artificielle supervisée est entraînée et validée afin d'être capable d'identifier un ou plusieurs objets prédéterminés dans des images qui sont analysées et traitées par cette intelligence artificielle supervisée. Les temps de calcul d'une telle identification d'un objet prédéterminé par l'intelligence artificielle supervisée sont en particulier très courts et compatibles avec des applications en vol en permettant la détection et l'identification d'un objet prédéterminé dans l'environnement de l'aéronef sensiblement en temps réel.

L'intelligence artificielle supervisée est avantageusement particulièrement performante pour détecter et identifier tout objet prédéterminé dont les caractéristiques sont connues au préalable, présent sur une image captée en vol par un dispositif de capture d'image embarqué sur un aéronef. Les caractéristiques d'un tel objet prédéterminé, et en particulier ses caractéristiques géométriques, sont connues au préalable, cet objet prédéterminé étant notamment présent sur une ou plusieurs représentations utilisées pour l'étape d'apprentissage de l'intelligence artificielle supervisée.

L'intelligence artificielle supervisée peut comporter par exemple un réseau de neurones multicouche, désigné également « perceptron multicouche », ou une machine à vecteurs de support. D'autres solutions d'intelligence artificielle peuvent également être utilisées. Le réseau de neurones comporte par exemple au moins deux couches de neurones cachées.

L'objet prédéterminé peut être une hélisurface ou un câble suspendu par exemple. L'intelligence artificielle supervisée peut ainsi être appliquée à la détection et l'identification lors d'un vol d'un aéronef et, plus particulièrement d'un giravion, d'une hélisurface en vue d'un atterrissage ou d'un câble suspendu afin d'éviter ce câble.

Les représentations utilisées et représentant au moins un objet prédéterminé et au moins une partie de son environnement peuvent comporter différents types de représentations.

Les représentations utilisées peuvent par exemple comporter des images contenant au moins un objet prédéterminé et au moins une partie de son environnement, telles que des photographies, captées par exemple à l'aide de caméras ou d'appareils photographiques depuis des aéronefs volant à proximité de cet au moins un objet prédéterminé. Lorsque l'objet prédéterminé est une hélisurface, les images peuvent avoir été captées lors d'une phase d'approche en vue d'un atterrissage ou bien lors d'un ou de vols dédiés à ces prises d'images. Lorsque l'objet prédéterminé est un câble suspendu, les images peuvent avoir été captées lors d'un vol à proximité de ce câble ou bien lors d'un ou de vols dédiés à ces prises d'images.

Les représentations utilisées peuvent aussi comporter des images issues d'une base de données de terrain, par exemple une base de données obtenue à l'aide d'un capteur de type LIDAR pour la désignation en l'anglaise « Llght Détection And Ranging », les données de terrain pouvant être en deux dimensions ou en trois dimensions.

Les représentations utilisées peuvent également comporter des images de synthèse construites par ordinateur par exemple, ou bien des images fournies par un satellite. Les représentations utilisées peuvent encore comporter d'autres types d'images.

Indépendamment des types d'images ou de représentations dudit au moins un objet prédéterminé, les représentations utilisées comportent plusieurs représentations d'un même objet prédéterminé avec des valeurs différentes d'au moins un paramètre caractéristique de ces représentations.

Ledit au moins un paramètre caractéristique de ces représentations comporte un ou plusieurs critères, par exemple une distance d'un objet prédéterminé sur les représentations ou un angle de vue de cet objet prédéterminé sur les représentations, l'objet prédéterminé étant ainsi représenté sur plusieurs représentations différentes à des distances différentes et/ou selon des angles de vues différents.

Ledit au moins un paramètre caractéristique de ces représentations peut aussi comporter un critère d'accumulation de la représentation, un critère de bruit de la représentation ou un critère de facteur de ressemblance de ladite représentation. Un objet prédéterminé peut ainsi être représenté sur plusieurs représentations avec des valeurs différentes de ce critère d'accumulation, de ce critère de bruit et/ou de ce critère de facteur de ressemblance.

Le critère d'accumulation est une caractéristique liée au traitement d'images subi par la représentation suite à une application d'une transformée de Hough. Pour l'application d'une transformée de Hough, le critère d'accumulation est par exemple égal à trois pour identifier une droite qui passe par trois points. Ce critère d'accumulation est défini empiriquement par essais et expérience.

Le critère de bruit, qui peut être associé à la notion de variance, et le critère de facteur de ressemblance, désigné également par le terme « matching » en langue anglaise, peuvent caractérisés des niveaux de qualité d'une représentation ou attachés à un objet prédéterminé sur une représentation.

Les valeurs des critères d'accumulation, de bruit et/ou de facteur de ressemblance associés à une représentation peuvent être fonction de la distance estimée de l'objet prédéterminé sur la représentation ainsi que d'autres phénomènes tels que par exemple un taux de faux échos liés à la pluie ou à la poussière.

Un objet prédéterminé peut aussi être représenté sur plusieurs représentations avec des conditions météorologiques variées, à savoir par temps clair, par temps de pluie, par temps de brouillard, de jour et de nuit...

Un objet prédéterminé peut également être représenté sur plusieurs représentations issues d'une même représentation initiale, par exemple une photographie, en modifiant notamment les couleurs, le contraste et/ou la luminosité de la représentation initiale.

L'utilisation de plusieurs représentations d'un même objet prédéterminé avec des valeurs différentes d'un ou de plusieurs paramètres caractéristiques de ces représentations permet que l'identification d'au moins un objet prédéterminé par traitement de représentations soit considérée comme une identification paramétrée.

Ainsi, l'apprentissage de l'intelligence artificielle supervisée permet de prendre en compte notamment divers points de vue et diverses conditions météorologiques pour obtenir une intelligence artificielle fiable et efficace.

Le procédé selon l'invention peut comprendre une ou plusieurs des caractéristiques qui suivent, prises seules ou en combinaison.

Selon une possibilité, l'étape d'identification d'au moins un objet prédéterminé par traitement de représentations peut comporter les sous-étapes suivantes :
- traitement des représentations en appliquant une ou plusieurs méthodes de traitement d'une image parmi un filtre de Sobel, une transformée de Hough, la méthode des moindres carrés, la méthode « snakes » et la méthode « image matching » afin détecter au moins une forme géométrique paramétrable,
- identification sur chacune des représentations d'au moins un objet prédéterminé à l'aide de cette au moins une forme géométrique, et
- mémorisation, pour chacune des représentations, de la représentation et de cet au moins un objet prédéterminé identifié.

Une forme géométrique paramétrable peut par exemple être une ellipse afin d'identifier un cercle tracé sur une hélisurface.

Une forme géométrique paramétrable peut aussi être un segment de droite formé par un alignement de points afin d'identifier les arêtes formant la lettre « H » inscrite sur une hélisurface.

Plus généralement, toute forme géométrique paramétrique et donc paramétrable peut être détectée, par exemple par une mise en place d'une transformée de Hough de m à 1 ou de 1 à m; m étant le nombre de paramètres de la forme géométrique à trouver.

Un tel segment de droite ou une autre forme géométrique particulière peuvent aussi être utilisés pour identifier un élément caractéristique de l'environnement de l'objet prédéterminé, tel qu'une ou plusieurs arêtes d'un bâtiment, un élément d'une structure métallique ou un élément d'un pylône situé à proximité de l'objet prédéterminé, voire supportant l'objet prédéterminé. Dans ce cas, le segment de droite ou la forme géométrique particulière ne permettent pas d'identifier directement l'objet prédéterminé, mais permettent d'identifier une partie de son environnement.

Une forme géométrique paramétrable peut également être une chaînette afin d'identifier un câble suspendu par exemple.

Une telle forme géométrique paramétrable, à savoir une ellipse, un segment de droite, une chaînette ou autres, peut ainsi constituer une caractéristique géométrique de l'objet prédéterminé.

L'étape d'identification sur chacune des représentations d'au moins un objet prédéterminé à l'aide de cette au moins une forme géométrique peut être réalisée à l'aide des critères d'accumulation comparés à des seuils qui permettent une telle détection dans le cadre de la transformée de Hough.

La mémorisation, pour chacune des représentations identifiées, de la représentation et de chaque objet prédéterminé identifié est effectuée sur une mémoire reliée au calculateur ou une mémoire que comporte le calculateur. Chaque objet prédéterminé identifié est par exemple mémorisé au travers de la mémorisation d'une ou plusieurs caractéristiques géométriques associées à la forme géométrique paramétrable utilisé pour détecter et identifier cet objet prédéterminé.

Selon une possibilité, l'étape d'identification d'au moins un objet prédéterminé peut comporter une sous-étape d'étiquetage automatique d'au moins un objet prédéterminé sur une représentation, cet étiquetage comportant au moins un paramètre d'étiquetage parmi la forme géométrique de l'objet prédéterminé, des paramètres de définition d'une telle forme géométrique de l'objet prédéterminé et des paramètres de positionnement de l'objet prédéterminé par exemple.

Les paramètres de définition d'une forme géométrique d'un objet prédéterminé peuvent comporter des paramètres de l'équation ou des équations définissant ladite forme géométrique dans l'espace, en vue de sa reconstruction par un système d'imagerie de synthèse par exemple. Les paramètres de définition d'une forme géométrique d'un objet prédéterminé peuvent aussi comporter des dimensions de ladite forme géométrique, par exemple les longueurs d'un petit axe et d'un grand axe dans le cas d'une ellipse.

Les paramètres de positionnement de l'objet prédéterminé peuvent être dépendant de l'installation embarquée permettant d'obtenir la représentation de l'objet prédéterminé, telle qu'une caméra ou un appareil photographique ou encore un capteur LIDAR. Un paramètre de positionnement de l'objet prédéterminé peut alors être une focale de l'objectif de l'installation embarquée, un biais de cette installation embarquée par exemple.

Par ailleurs, la sous-étape d'étiquetage automatique d'au moins un objet prédéterminé sur une représentation peut être réalisée préalablement à la réalisation du procédé d'apprentissage d'une intelligence artificielle supervisée destinée à identifier un objet prédéterminé dans l'environnement d'un aéronef en vol.

La sous-étape de sélection du jeu d'apprentissage peut être réalisée selon au moins un paramètre d'étiquetage.

Selon une possibilité, les sous-étapes de sélection du jeu d'apprentissage et de sélection du jeu de validation sont réalisées selon au moins un paramètre caractéristique desdites représentations, par exemple un seul paramètre caractéristique ou selon plusieurs paramètres caractéristiques combinés.

Par exemple, la sous-étape de sélection du jeu d'apprentissage peut être réalisée selon le critère d'accumulation.

Par exemple, la sous-étape de sélection du jeu d'apprentissage est réalisée avec 1000 représentations identifiées en entrée, dont :
- 600 représentations avec un critère d'accumulation très haut, correspondant à des représentations à courte distance et comportant un seul objet prédéterminé,
- 300 représentations avec un critère d'accumulation haut, correspondant à des représentations à moyenne distance et comportant un seul objet prédéterminé,
- 100 représentations avec un critère d'accumulation faible, correspondant à des représentations à grande distance et comportant plusieurs objets prédéterminé.

La sous-étape de sélection du jeu de validation peut aussi être réalisée selon le critère d'accumulation. Par ailleurs, les représentations du jeu de validation peuvent être distinctes des représentations du jeu d'apprentissage.

La sous-étape de sélection du jeu d'apprentissage et/ou la sous-étape de sélection du jeu de validation peuvent également être réalisées selon le critère de bruit et/ou le critère de facteur de ressemblance des représentations ou encore la distance d'un objet prédéterminé sur les représentations.

De la sorte, les sous-étapes de sélection du jeu d'apprentissage et/ou de sélection du jeu de validation peuvent être considérées comme des sélections paramétrées.

En outre, un processus itératif peut être associé à la sélection des représentations formant les jeux d'apprentissage et de validation en fonction de la robustesse de l'intelligence artificielle supervisée voulue.

Par exemple, lorsque l'intelligence artificielle supervisée comporte un réseau multicouche, les étapes d'apprentissage et de validation de l'intelligence artificielle supervisée peuvent permettre de déterminer un nombre optimal de neurones par couche et un nombre optimal de couches de neurones ainsi que les fonctions d'activation des neurones.

En effet, il existe un nombre optimal de neurones par couche et un nombre optimal de nombre de couches de neurones afin d'identifier avec précision et une extrême rapidité le ou les objets prédéterminés présents sur une image. En effet, un nombre de couches et/ou un nombre de neurones par couche trop faible peuvent aboutir à une non détection d'un objet prédéterminé. A contrario, un nombre de couches et/ou un nombre de neurones par couche trop importants peuvent aboutir à dégrader le résultat final, en obtenant un temps de calcul non optimisé.

Dans ce but, au cours des étapes d'apprentissage et de validation du réseau de neurones, le nombre de neurones et le nombre de couches de neurones sont déterminés par itération jusqu'à l'obtention d'un résultat attendu pour l'identification du ou des objets prédéterminés présents sur les représentations lors de l'étape de validation. Le résultat attendu est par exemple la précision des paramètres de la forme géométrique paramétrée en sortie du réseau de neurones.

Si le résultat attendu n'est pas atteint, les étapes d'apprentissage et de validation sont à nouveau effectuées en augmentant le nombre de couches et le nombre de neurones par couche. Si le résultat attendu est atteint, le réseau de neurones est validé avec le nombre de couches et le nombre de neurones par couche utilisés.

De plus, le choix de la fonction d'activation associée à chaque neurone influe également sur la performance et la précision du réseau de neurones. Ainsi, lors d'une itération, les fonctions d'activation des neurones peuvent également être modifiées.

Une telle optimisation du réseau de neurones, des fonctions d'activation des neurones, du nombre de couches et du nombre de neurones par couche permet de la sorte d'optimiser en particulier le temps de calcul, sans nécessiter un calculateur embarqué doté d'une puissance de calcul importante et, de fait, volumineux et couteux.

Un tel réseau de neurones utilise comme données d'entrée les représentations avec au moins un objet prédéterminé présent identifié ainsi que la valeur d'au moins un critère associé à chaque représentation, par exemple un critère d'accumulation, un critère de bruit et/ou un critère de facteur de ressemblance. Les données de sortie du réseau de neurones comportent par exemple les paramètres de la forme géométrique détectée et les valeurs de cet au moins un critère associé à chaque représentation.

Selon une possibilité, les sous-étapes de sélection du jeu d'apprentissage et de sélection du jeu de validation sont réalisées par sélection aléatoire parmi les représentations identifiées. Les représentations du jeu de validation peuvent en tout ou partie être distinctes des représentations du jeu d'apprentissage.

Selon une possibilité, les représentations sont limitées à des objets prédéterminés situés dans une zone géographique déterminée. Les représentations sont limitées à des objets prédéterminés situés par exemple dans un pays, une région ou une ville. Cette limitation de la zone géographique peut ainsi permettre de limiter la taille de l'intelligence artificielle supervisée nécessaire et de minimiser le temps de calcul de l'intelligence artificielle supervisée pour l'identification d'un objet prédéterminé.

Par ailleurs, la présente invention a aussi pour objet un procédé d'aide à l'atterrissage d'un aéronef, l'aéronef comportant au moins un calculateur embarqué et au moins un dispositif de capture d'images relié au calculateur, le procédé étant mis en œuvre par le calculateur.

Par commodité, cet au moins un calculateur est désigné par la suite par l'expression « calculateur spécifique » et cet au moins un dispositif de capture d'images est désigné par la suite par l'expression « dispositif spécifique de capture d'images ». De même, une mémoire et un dispositif d'affichage associé à ce procédé d'aide à l'atterrissage d'un aéronef sont désignés respectivement par les expressions « mémoire spécifique » et « dispositif spécifique d'affichage ». L'adjectif « spécifique » ne limite pas l'utilisation de ces éléments uniquement à ce procédé.

Le dispositif spécifique de capture d'images peut par exemple comporter au moins une caméra ou un appareil photographique captant des images d'une zone située à l'avant de l'aéronef.

Le procédé d'aide à l'atterrissage d'un aéronef comporte les étapes suivantes :
- acquisition d'au moins une image d'un environnement de l'aéronef à l'aide dudit au moins un dispositif spécifique de capture d'images, et
- identification d'au moins une hélisurface dans l'environnement par traitement de ladite au moins une image avec l'intelligence artificielle supervisée à l'aide du calculateur spécifique, l'intelligence artificielle supervisée étant définie à l'aide du procédé d'apprentissage précédemment décrit, l'objet prédéterminé préalablement connu étant une hélisurface, l'intelligence artificielle supervisée étant stockée dans une mémoire spécifique reliée au calculateur spécifique.

Ce procédé d'aide à l'atterrissage d'un aéronef permet ainsi d'identifier automatiquement à l'aide de l'intelligence artificielle supervisée et d'images captées par ledit au moins un dispositif spécifique de capture d'images au plus tôt et de façon rapide, une ou plusieurs hélisurfaces préalablement connues et présentes dans l'environnement de l'aéronef, déchargeant de la sorte le pilote et/ou le copilote de cette recherche. Ce procédé d'aide à l'atterrissage d'un aéronef permet d'identifier automatiquement une ou plusieurs hélisurfaces, y compris en cas de conditions météorologiques dégradées, par temps de pluie ou de brouillard, et éventuellement de nuit, en identifiant la ou les hélisurfaces, par exemple à l'aide de caractéristiques géométriques de la ou des hélisurfaces, et éventuellement des éléments caractéristiques de l'environnement facilitant la détermination de la ou les hélisurfaces.

Afin d'indiquer la présence d'au moins une hélisurface, ce procédé peut comporter une étape d'affichage, sur un dispositif spécifique d'affichage de l'aéronef, d'un premier repère d'identification en superposition de la au moins une hélisurface identifiée sur une image représentant l'environnement de l'aéronef ou bien sur une vue directe de l'environnement à travers le dispositif spécifique d'affichage. Le dispositif spécifique d'affichage peut être un affichage tête haute, un écran agencé sur un tableau de bord de l'aéronef, voire une partie d'un pare-brise de l'aéronef.

Ce procédé peut aussi comporter une étape de détermination d'au moins une hélisurface disponible pour un atterrissage parmi ladite au moins une hélisurface identifiée.

Dans ce but, l'intelligence artificielle supervisée peut identifier la présence d'une hélisurface tout en détectant que la vision n'est pas conforme à sa perception lors de l'apprentissage. Par exemple, la lettre « H » inscrite sur l'hélisurface peut ne pas être identifié ou ne pas être visible totalement.

Une valeur faible du critère d'accumulation sur la lettre « H » et une valeur forte du critère d'accumulation sur l'ellipse inscrite sur l'hélisurface peut par exemple donner un indicateur de présence d'un véhicule sur l'hélisurface, cette hélisurface étant alors considérée comme étant occupé par un véhicule et de fait non disponible pour un atterrissage. La présence d'une hélisurface considérée comme étant occupé par un véhicule et donc non disponible pour un atterrissage peut être prise en compte lors de l'apprentissage de l'intelligence artificielle supervisée et être une donnée de sortie de cette intelligence artificielle supervisée.

Ce procédé peut alors comporter une étape d'affichage, sur le dispositif spécifique d'affichage, d'un deuxième repère d'identification en superposition de ladite au moins une hélisurface disponible pour un atterrissage sur une image représentant l'environnement de l'aéronef ou bien sur une vue directe de l'environnement à travers le dispositif spécifique d'affichage. Ce procédé peut aussi comporter une étape d'affichage, sur le dispositif spécifique d'affichage, d'un troisième repère d'identification en superposition de ladite au moins une hélisurface occupé par un véhicule et de fait non disponible pour un atterrissage sur une image représentant l'environnement de l'aéronef ou bien sur une vue directe de l'environnement à travers le dispositif spécifique d'affichage.

Ce procédé peut encore comporter des étapes supplémentaires suivantes :
- sélection d'une hélisurface pour réaliser un atterrissage sur l'hélisurface sélectionnée parmi ladite au moins une hélisurface identifiée,
- détermination d'une position de l'hélisurface sélectionnée,
- détermination d'une consigne de guidage de l'aéronef vers l'hélisurface sélectionnée à l'aide du calculateur spécifique, et
- guidage automatique de l'aéronef vers l'hélisurface sélectionnée à l'aide d'un dispositif de pilotage automatique de l'aéronef.

La sélection de l'hélisurface, sur laquelle doit être réalisé un atterrissage, peut être faite manuellement par un pilote ou un copilote de l'aéronef, par exemple à l'aide d'une dalle tactile ou d'un pointeur associé au dispositif spécifique d'affichage affichant l'environnement de l'aéronef et ladite au moins une hélisurface identifiée.

Cette sélection de l'hélisurface, sur laquelle doit être réalisé un atterrissage, peut aussi être faite automatiquement, notamment lorsqu'une seule hélisurface est identifiée ou bien lorsqu'une seule hélisurface est disponible pour un atterrissage parmi les hélisurfaces identifiées.

La position déterminée de l'hélisurface sélectionnée est une position relative à l'aéronef déterminée par exemple par un traitement des images captées par le dispositif spécifique de capture d'images, effectuée à l'aide du calculateur spécifique, associé éventuellement à un calcul, par exemple via un algorithme, en fonction des caractéristiques du dispositif spécifique de capture d'images. Les caractéristiques du dispositif spécifique de capture d'images comportent par exemple la focale utilisée ainsi que l'orientation du dispositif spécifique de capture d'images par rapport à l'aéronef, à savoir le site et le gisement.

La connaissance d'une ou de plusieurs caractéristiques géométriques de l'hélisurface sélectionnée, telles que les dimensions de la lettre, par exemple « H », inscrite sur cette hélisurface ou encore le diamètre d'un cercle tracé sur l'hélisurface permettent également de déterminer la position relative de l'hélisurface sélectionnée par rapport à l'aéronef en étant associées aux caractéristiques du dispositif spécifique de capture d'images.

La consigne est alors déterminée en fonction de cette position relative et mise à jour suite au rapprochement de l'aéronef de l'hélisurface sélectionnée.

Cette consigne est transmise au dispositif de pilotage automatique de l'aéronef afin de réaliser de façon automatique une approche vers l'hélisurface sélectionnée.

Ce procédé peut aussi comporter une étape finale d'atterrissage sur l'hélisurface sélectionnée de façon automatique à l'aide du dispositif de pilotage automatique.

En outre, le procédé peut comporter une étape de calcul d'une distance entre ladite au moins une hélisurface identifiée et l'aéronef. Une seule distance est calculée et est égale par exemple à la distance entre le centre de l'hélisurface identifiée et l'aéronef lorsqu'une seule hélisurface est identifiée. Plusieurs distances sont calculées et sont respectivement égales par exemple à la distance entre le centre de chacune des hélisurfaces identifiées et l'aéronef lorsque plusieurs hélisurfaces sont identifiées.

Une telle distance est calculée par le calculateur spécifique selon la position relative d'une hélisurface identifiée par rapport à l'aéronef, en fonction d'une ou de plusieurs caractéristiques géométriques de cette hélisurface, des formes géométriques associées à ces caractéristiques géométriques représentées sur ladite au moins une image captée et des caractéristiques du dispositif spécifique de capture d'images.

Le procédé peut aussi comporter une étape d'affichage de la ou des distances calculées sur le dispositif spécifique d'affichage. Une distance est par exemple affichée à proximité de l'hélisurface correspondante sur le dispositif spécifique d'affichage.

La présente invention a également pour objet un système d'aide à l'atterrissage d'un aéronef, le système comportant :
- au moins un calculateur spécifique embarqué,
- au moins une mémoire spécifique reliée au calculateur spécifique, et
- au moins un dispositif spécifique de capture d'images relié au calculateur spécifique.

L'aéronef peut aussi comporter un dispositif spécifique d'affichage et/ou un dispositif de pilotage automatique.

Le système est configuré pour la mise en œuvre du procédé d'aide à l'atterrissage d'un aéronef tel que précédemment décrit.

La présente invention a encore pour objet un aéronef comportant un tel système d'aide à l'atterrissage d'un aéronef.

La présente invention a aussi pour objet un procédé d'aide à l'évitement d'un câble avec un aéronef, l'aéronef comportant au moins un calculateur embarqué et au moins un dispositif de capture d'images relié au calculateur, le procédé étant mis en oeuvre par le calculateur.

Par commodité, cet au moins un calculateur est désigné par la suite par l'expression « calculateur propre » et cet au moins un dispositif de capture d'images est désigné par la suite par l'expression « dispositif propre de capture d'images ». De même, une mémoire et un dispositif d'affichage associé à ce procédé d'aide à évitement d'un câble avec un aéronef sont désignés respectivement par les expressions « mémoire propre » et « dispositif propre d'affichage ». L'adjectif « propre » ne limite pas l'utilisation de ces éléments uniquement à ce procédé.

Le procédé comporte les étapes suivantes :
- acquisition d'au moins une image d'un environnement de l'aéronef à l'aide dudit au moins un dispositif propre de capture d'images, et
- identification d'au moins un câble dans l'environnement par traitement des images avec l'intelligence artificielle supervisée à l'aide du calculateur propre, l'intelligence artificielle supervisée étant définie à l'aide du procédé d'apprentissage précédemment décrit, l'objet prédéterminé préalablement connu étant un câble, l'intelligence artificielle supervisée étant stockée dans une mémoire propre reliée au calculateur propre.

Ce procédé d'aide à l'évitement d'un câble avec un aéronef permet ainsi d'identifier automatiquement à l'aide de l'intelligence artificielle supervisée et d'images captées par ledit au moins un dispositif propre de capture d'images au plus tôt et de façon rapide, un ou plusieurs câbles préalablement connus et présents dans l'environnement de l'aéronef et susceptibles de se trouver sur ou à proximité de la trajectoire de l'aéronef. De la sorte, le pilote et/ou le copilote sont déchargés de cette recherche et peuvent se consacrer au pilotage de l'aéronef notamment. Ce procédé d'aide à l'évitement d'un câble avec un aéronef permet d'identifier automatiquement un ou plusieurs câbles, y compris en cas de conditions météorologiques dégradées, par temps de pluie ou de brouillard, et éventuellement de nuit, en identifiant d'une part le ou les câbles, par exemple à l'aide de caractéristiques géométriques du ou des câbles, et d'autre part des éléments caractéristiques de l'environnement.

Afin d'indiquer la présence d'au moins un câble, ce procédé peut comporter une étape d'affichage, sur un dispositif propre d'affichage de l'aéronef, d'un symbole d'identification en superposition dudit au moins un câbles identifié sur une image représentant l'environnement de l'aéronef ou bien sur une vue directe de l'environnement à travers le dispositif propre d'affichage. Le dispositif propre d'affichage peut être un affichage tête haute, un écran agencé sur un tableau de bord de l'aéronef, voire une partie d'un pare-brise de l'aéronef. Le dispositif spécifique d'affichage et le dispositif propre d'affichage peuvent être un même dispositif d'affichage.

Ce procédé peut comporter des étapes supplémentaires suivantes :
- détermination d'une position dudit au moins un câble identifié,
- détermination d'une consigne de guidage de l'aéronef évitant ledit au moins un câble identifié à l'aide du calculateur propre, et
- guidage automatique de l'aéronef selon la consigne de guidage à l'aide d'un dispositif de pilotage automatique de l'aéronef.

La position déterminée d'un câble identifié peut être une position relative à l'aéronef déterminée par exemple par un traitement des images captées par le dispositif propre de capture d'images, effectuée à l'aide du calculateur propre, associé éventuellement à un calcul, par exemple via un algorithme, en fonction des caractéristiques du dispositif propre de capture d'images. Les caractéristiques du dispositif propre de capture d'images comportent par exemple la focale utilisée ainsi que l'orientation du dispositif propre de capture d'images par rapport à l'aéronef, à savoir le site et le gisement.

La connaissance d'une ou de plusieurs caractéristiques géométriques dudit au moins un câble identifié, telles que sa longueur ou son rayon de courbure, permettent également de déterminer la position relative dudit au moins un câble identifié par rapport à l'aéronef en étant associées aux caractéristiques du dispositif propre de capture d'images.

La consigne est alors déterminée en fonction de cette position relative et mise à jour suite au déplacement de l'aéronef par rapport audit au moins un câble identifié.

La position déterminée d'un câble identifié peut aussi être une position absolue dans un repère terrestre par exemple. Cette position absolue peut être enregistrée dans une base de données dédiée.

Cette consigne est ensuite transmise au dispositif de pilotage automatique de l'aéronef afin de réaliser de façon automatique une trajectoire de vol évitant ledit au moins un câble identifié.

En outre, le procédé peut comporter une étape de calcul d'une distance entre ledit au moins un câble identifié et l'aéronef. Cette distance est calculée en fonction de la position relative du câble identifié par rapport à l'aéronef. Une seule distance est calculée et est égale par exemple à la plus courte distance entre le câble identifié et l'aéronef lorsqu'un seul câble est identifié. Plusieurs distances sont calculées et sont respectivement égales par exemple à la plus courte distance entre chacun des câbles identifiés et l'aéronef lorsque plusieurs câbles sont identifiés.

Une telle distance est calculée par le calculateur propre selon la position relative d'un câble identifié par rapport à l'aéronef, en fonction d'une ou de plusieurs caractéristiques géométriques de ce câble, des formes géométriques associées à ces caractéristiques géométriques représentées sur ladite au moins une image captée et des caractéristiques du dispositif propre de capture d'images.

Le procédé peut aussi comporter une étape d'affichage de la ou des distances calculées sur le dispositif propre d'affichage. Une distance est par exemple affichée à proximité du câble correspondant sur le dispositif propre d'affichage.

La présente invention a également pour objet un système d'aide à l'évitement d'un câble avec un aéronef, le système comportant :
- au moins un calculateur propre embarqué,
- au moins une mémoire propre reliée au calculateur propre, et
- au moins un dispositif propre de capture d'images relié au calculateur propre.

L'aéronef peut aussi comporter un dispositif propre d'affichage et/ou un dispositif de pilotage automatique.

Le système est configuré pour la mise en œuvre du procédé d'aide à l'évitement d'un câble tel que précédemment décrit.

La présente invention a également pour objet un aéronef comportant un tel système d'aide à l'évitement d'un câble avec un aéronef.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef comportant un système selon l'invention, et
- la figure 2, un schéma synoptique d'un procédé d'apprentissage d'une intelligence artificielle supervisée destinée à identifier un objet prédéterminé,
- la figure 3, un schéma synoptique d'un procédé d'aide à l'atterrissage d'un aéronef,
- la figure 4, une vue comportant des hélisurfaces
- la figure 5, un schéma synoptique d'un procédé d'aide à l'évitement d'un câble avec un aéronef, et
- la figure 6, une vue comportant des câbles suspendus.

Les éléments présents dans plusieurs figures distinctes sont affectés d'une seule et même référence.

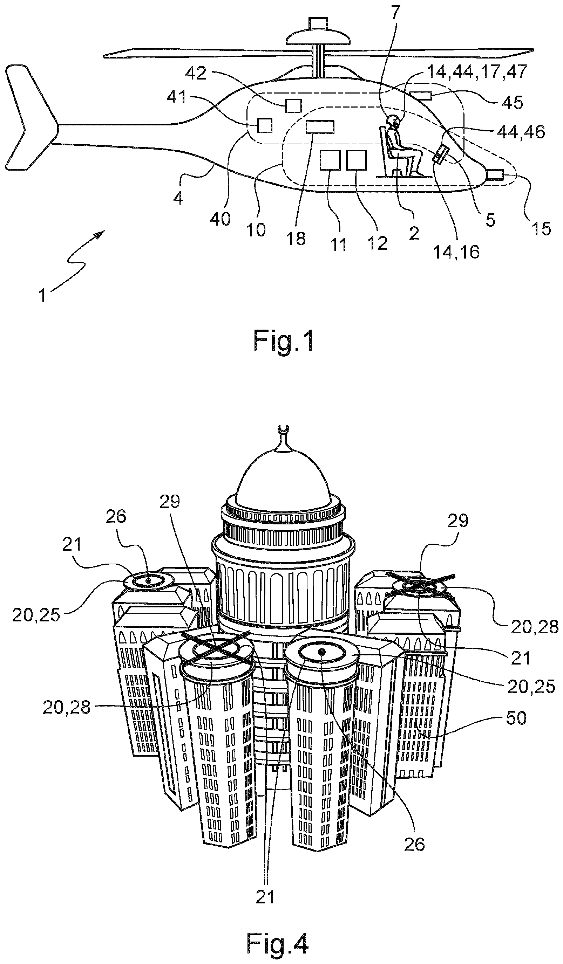

La figure 1 représente un aéronef 1 muni d'une cellule 4. Un pilote 2 est positionné à l'intérieur de la cellule 4. L'aéronef 1 représenté sur la figure 1 est un aéronef muni d'une voilure tournante. Dans le cadre de l'invention, l'aéronef 1 peut être un autre type d'aéronef, et comporter par exemple plusieurs voilures tournantes.

L'aéronef 1 comporte également un système 10 d'aide à l'atterrissage de l'aéronef 1 et un système 40 d'aide à l'évitement d'un câble avec un aéronef 1.

Le système 10 d'aide à l'atterrissage de l'aéronef 1 comporte un calculateur spécifique 11 embarqué, une mémoire spécifique 12, un dispositif spécifique de capture d'images 15, au moins un dispositif spécifique d'affichage 14 voire un dispositif de pilotage automatique 18 de l'aéronef 1. Le calculateur spécifique 11 est relié à la mémoire spécifique 12, au dispositif spécifique de capture d'images 15, à chaque dispositif spécifique d'affichage 14 et au dispositif de pilotage automatique 18 éventuel par des liaisons filaires ou non filaires. Le calculateur spécifique 11 peut ainsi communiquer avec ces éléments du système 10 d'aide à l'atterrissage de l'aéronef 1.

Le système 40 d'aide à l'évitement d'un câble avec un aéronef 1 comporte un calculateur propre 41, une mémoire propre 42, un dispositif propre de capture d'images 45, au moins un dispositif propre d'affichage 44 voire le dispositif de pilotage automatique 18 de l'aéronef 1. Le calculateur propre 41 est relié à la mémoire propre 42, au dispositif propre de capture d'images 45, à chaque dispositif propre d'affichage 44 et éventuellement au dispositif de pilotage automatique 18 éventuel par des liaisons filaires ou non filaires. Le calculateur propre 41 peut ainsi communiquer avec ces éléments du système 40 d'aide à l'évitement d'un câble.

Les calculateurs 11,41 peuvent comporter par exemple au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue sous l'acronyme DSP, un microcontrôleur...

Ledit au moins un dispositif spécifique d'affichage 14 comporte, par exemple, un écran spécifique 16 positionné sur un tableau de bord 5 de l'aéronef 1 et/ou un dispositif spécifique de visualisation 17 agencé sur un casque 7 du pilote 2.

Ledit au moins un dispositif propre d'affichage 44 comporte, par exemple, un écran propre 46 positionné sur le tableau de bord 5 et/ou un dispositif propre de visualisation 47 agencé sur le casque 7 du pilote 2.

Les écrans 16,46 positionnés sur un tableau de bord 5 peuvent être distincts comme représentés sur la figure 1. Les écrans 16,46 peuvent alternativement former un seul et même écran.

Les dispositifs de visualisation 17,47 agencés sur le casque 7 du pilote 2 forment un seul et même dispositif de visualisation 17,47 permettant l'affichage d'informations en surimpression d'une vision directe du paysage extérieur à l'aéronef 1.

Les dispositifs de capture d'images 15,45 sont positionnés afin de capter des images d'une zone avant de l'environnement de l'aéronef 1. Les dispositifs de capture d'images 15,45 sont par exemple fixés sur la cellule 4 de l'aéronef 1 et orientés vers l'avant de l'aéronef 1. Les dispositifs de capture d'images 15,45 peuvent être distincts comme représentés sur la figure 1. Les dispositifs de capture d'images 15,45 peuvent alternativement former un seul et même dispositif de capture d'images. Les dispositifs de capture d'images 15,45 peuvent comporter, par exemple, une caméra ou un appareil photographique.

Le dispositif de pilotage automatique 18 est commun aux deux systèmes 10,40. Le dispositif de pilotage automatique 18 peut agir de façon automatique sur des organes de pilotage de l'aéronef 1 afin de transmettre une ou plusieurs consignes à ces organes de pilotage de sorte à effectuer un vol selon une trajectoire attendue vers un point objectif par exemple.

La mémoire spécifique 12 stocke une intelligence artificielle supervisée configurée pour l'identification d'objets prédéterminés 20,30 dans l'environnement de l'aéronef 1 plus précisément pour l'identification d'hélisurfaces 20,25 dans l'environnement de l'aéronef 1.

La mémoire propre 42 stocke une intelligence artificielle supervisée configurée pour l'identification d'objets prédéterminés 20,30 dans l'environnement de l'aéronef 1, plus précisément l'identification de câbles 30 dans l'environnement de l'aéronef 1.

Chacune de ces intelligences artificielles supervisées peut comporter un réseau de neurones multicouche muni d'au moins deux couches cachées ou une machine à vecteurs de support.

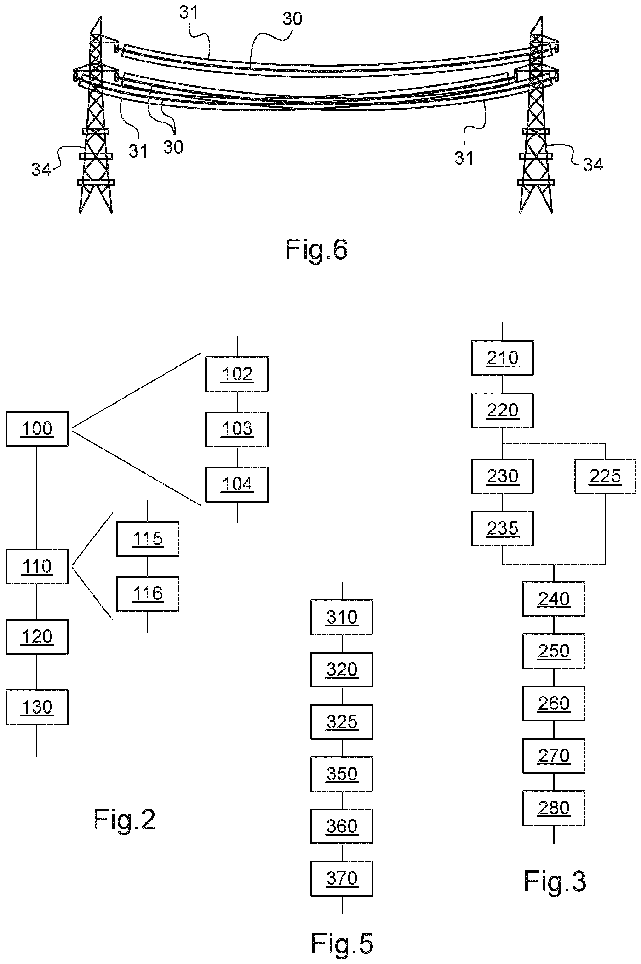

Un schéma synoptique relatif à un procédé d'apprentissage d'une intelligence artificielle supervisée destinée à identifier un objet prédéterminé préalablement connu est représenté sur la figure 2. Pour rappel, un objet prédéterminé peut être par exemple une hélisurface 20,25 ou un câble 30 situé dans l'environnement de l'aéronef 1.

Le procédé d'apprentissage de l'intelligence artificielle supervisée comporte plusieurs étapes suivantes réalisées à l'aide d'un calculateur dédié et éventuellement distinct des calculateurs 11,41 embarqués.

Tout d'abord, une étape d'identification 100 d'au moins un objet prédéterminé 20,30 est réalisée par traitement des représentations représentant au moins un objet prédéterminé 20,30 et au moins une partie de son environnement. Les représentations utilisées lors de cette étape d'indentification 100 comportent plusieurs représentations d'un même objet prédéterminé 20,30 avec des valeurs différentes d'au moins un paramètre caractéristique de ces représentations.

Les représentations peuvent provenir de différentes sources et être de types différents. Les représentations peuvent comporter des images captées par un aéronef en vol par une caméra ou un appareil photographique, des images issues d'une base de données de terrain, ou encore des images de synthèse par exemple.

En outre, ces représentations peuvent être limitées à des objets prédéterminés situés dans une zone géographique déterminée telle qu'un pays, une région ou une ville.

Cet au moins un paramètre caractéristique de ces représentations comporte par exemple un critère d'accumulation, un critère de bruit de ladite représentation, un critère de facteur de ressemblance de ces représentations, la distance estimée de l'objet prédéterminé 20,30 sur chaque représentation, l'angle de vue par rapport à l'objet prédéterminé, les conditions météorologiques de ces représentations ou encore les couleurs, le contraste et/ou la luminosité de ces représentations...

L'ensemble des représentations peut éventuellement former une base de données.

Cette étape d'identification 100 peut comporter des sous-étapes.

Une sous-étape d'étiquetage automatique d'au moins un objet prédéterminé peut être par exemple réalisée par le calculateur ou bien avoir été réalisée préalablement. Cet étiquetage comporte au moins un paramètre d'étiquetage pour chaque objet prédéterminé 20,30, par exemple la forme géométrique de l'objet prédéterminé 20,30, des paramètres de définition d'une telle forme géométrique ,tels que des paramètres de l'équation définissant ladite forme géométrique ou ses dimensions, et des paramètres de positionnement de l'objet prédéterminé 20,30, tel qu'une distance de l'objet prédéterminé 20,30, une focale d'un objectif ou un biais d'une installation utilisée pour captée l'objet prédéterminé 20,30.

Une sous-étape de traitement 102 de ces représentations est par exemple réalisée par le calculateur en appliquant une ou plusieurs méthodes de traitement d'images telles qu'un filtre de Sobel, une transformée de Hough, la méthode des moindres carrés, la méthode « snakes » et la méthode « image matching ». Cette sous-étape de traitement 102 permet de détecter dans chaque représentation au moins une forme géométrique paramétrable, telle qu'un segment de droite, une ellipse, une chaînette ou d'autres formes géométriques particulières. Une forme géométrique paramétrable peut être définie par un nombre de points de la forme géométrique à trouver.

Ensuite, une sous-étape d'identification 103 sur chacune des représentations d'au moins un objet prédéterminé 20,30 est réalisée par le calculateur à l'aide de la forme géométrique paramétrable.

Une ellipse peut correspondre à un cercle tracé sur une hélisurface 20,25 et vu avec certains angles de vue sur une représentation et peut permettre ainsi d'identifier une hélisurface 20,25.

Un segment de droite peut aussi correspondre à un cercle tracé sur une hélisurface 20,25 et vu à longue distance selon une représentation et peut permettre ainsi d'identifier une hélisurface 20,25. Un segment de droite peut également correspondre à des éléments de la lettre « H » inscrite sur une hélisurface 20,25 et peut permettre ainsi d'identifier ainsi une hélisurface 20,25.

Un tel segment de droite peut encore correspondre à un bâtiment ou à un élément d'une structure métallique situé dans l'environnement de l'objet prédéterminé. De même, une forme géométrique particulière peut aussi correspondre à un tel bâtiment ou un tel élément d'une structure métallique.

Une chaînette peut correspondre à un câble 30 suspendu et permettre ainsi d'identifier ce câble 30.

Une sous-étape de mémorisation 104, pour chacune des représentations, de la représentation et de cet au moins un objet prédéterminé 20,30 identifié dans une mémoire relié par exemple de façon filaire ou non filaire au calculateur est réalisée. Chaque objet prédéterminé 20,30 identifié peut être mémorisé avec des caractéristiques géométriques associées à la forme géométrique paramétrable ayant permis l'identification de cet objet prédéterminé 20,30, à savoir un segment de droite, une ellipse, une chaînette ou une forme géométrique particulière.

Ensuite, une étape d'établissement 110 d'un jeu d'apprentissage et d'un jeu de validation est réalisée et comporte deux sous-étapes.

Lors d'une sous-étape de sélection 115, plusieurs représentations sont sélectionnées parmi toutes les représentations identifiées afin de former le jeu d'apprentissage.

Lors d'une sous-étape de sélection 116, plusieurs représentations sont sélectionnées parmi toutes les représentations identifiées afin de former le jeu de validation.

Les sous-étapes de sélection 115,116 des jeux d'apprentissage et de validation peuvent être réalisées selon un ou plusieurs paramètres caractéristiques de ces représentations, selon au moins un paramètre d'étiquetage ou bien par sélection aléatoire parmi l'ensemble des représentations.

Les sélections 115,116 peuvent être effectuées manuellement par un opérateur. Ces sélections 115,116 peuvent également être réalisées de façon automatique par le calculateur, par exemple en fonction de ces paramètres caractéristiques de ces représentations ou d'un paramètre d'étiquetage.

Par ailleurs, les jeux d'apprentissage et de validation peuvent être identiques ou bien comporter des représentations distinctes.

Les jeux d'apprentissage et de validation sont ensuite utilisés afin d'alimenter l'intelligence artificielle supervisée.

Ainsi, au cours d'une étape d'apprentissage 120, le jeu d'apprentissage est utilisé pour l'apprentissage de l'intelligence artificielle supervisée. Lors de cette étape d'apprentissage 120, l'intelligence artificielle supervisée est ainsi entraînée afin d'identifier un ou plusieurs objets prédéterminés dans les représentations formant le jeu d'apprentissage.

Puis, au cours d'une étape de validation 130, le jeu de validation est utilisé pour la validation de l'intelligence artificielle supervisée en utilisant le jeu de validation. Lors d'une étape de validation 130, l'efficacité et la fiabilité de l'intelligence artificielle supervisée sont vérifiées.

Cette intelligence artificielle supervisée ainsi définie peut être stockée dans la mémoire spécifique 12 du système 10 d'aide à l'atterrissage de l'aéronef 1 de sorte que ce système 10 mette en oeuvre, à l'aide du calculateur spécifique 11, le procédé d'aide à l'atterrissage d'un aéronef dont un schéma synoptique est représenté sur la figure 3. Ce procédé d'aide à l'atterrissage d'un aéronef comporte plusieurs étapes.

Au cours d'une étape d'acquisition 210, au moins une image d'un environnement de l'aéronef 1 est captée à l'aide du dispositif spécifique de capture d'images 15.

Ensuite, au cours d'une étape d'identification 220, au moins une hélisurface préalablement connue est identifiée dans l'environnement par traitement de ladite au moins une image captée avec l'intelligence artificielle supervisée à l'aide du calculateur spécifique 11.

De la sorte, l'intelligence artificielle supervisée identifie automatiquement et rapidement sur les images captées une ou plusieurs hélisurfaces 20 préalablement connues et présentes dans l'environnement de l'aéronef 1, en identifiant la ou les hélisurfaces 20, par exemple à l'aide de caractéristiques géométriques de la ou des hélisurfaces 20, voire des éléments caractéristiques de l'environnement.

Le procédé d'aide à l'atterrissage d'un aéronef peut comporter des étapes supplémentaires.

Par exemple, au cours d'une étape d'affichage 225, un premier repère 21 d'identification est affiché sur le dispositif spécifique d'affichage 14 comme représenté sur la figure 4. Le premier repère 21 d'identification peut être affiché en superposition de chaque hélisurface 20 identifiée sur une image représentant l'environnement de l'aéronef 1 sur l'écran 16 ou bien sur une vue directe de l'environnement sur le dispositif de visualisation 17 du casque 7. De la sorte, le pilote peut visualiser la présence et la position de chaque hélisurface 20 présente devant l'aéronef 1. Le premier repère 21 d'identification a par exemple une forme elliptique. Sur cette figure 4, les hélisurfaces 20 identifiées sont situées en haut d'un bâtiment 50.

Au cours d'une étape de détermination 230 d'au moins une hélisurface 25 disponible pour un atterrissage, chaque hélisurface 25 disponible pour un atterrissage parmi chaque hélisurface 20 identifiée est déterminée par le calculateur spécifique 11 à l'aide de l'intelligence artificielle supervisée en analysant les images captées par le dispositif spécifique de capture d'images 15. Cette disponibilité d'une hélisurface 20 est par exemple déterminée en établissant que la lettre « H » inscrite sur l'hélisurface 25 est visible totalement.

Ensuite, un deuxième repère 26 d'identification peut être affiché au cours d'une étape d'affichage 235 sur le dispositif spécifique d'affichage 14 pour chaque hélisurface 25 disponible. Le deuxième repère 26 d'identification est affiché en superposition de chaque hélisurface 25 disponible sur une image représentant l'environnement de l'aéronef 1 sur l'écran 16 ou bien sur une vue directe de l'environnement sur le dispositif de visualisation 17 du casque 7. Le deuxième repère 26 d'identification a par exemple la forme d'un point et peut être affiché avec une couleur spécifique, par exemple la couleur verte.

Un troisième repère 29 d'identification peut être affiché au cours de cette étape d'affichage 235 sur le dispositif spécifique d'affichage 14 pour chaque hélisurface 28 occupé par un véhicule et de fait non disponible pour un atterrissage. Le troisième repère 29 d'identification est affiché en superposition de chaque hélisurface 28 occupé sur une image représentant l'environnement de l'aéronef 1 sur l'écran 16 ou bien sur une vue directe de l'environnement sur le dispositif de visualisation 17 du casque 7. Le troisième repère 29 d'identification a par exemple la forme d'une croix et peut être affiché avec une couleur spécifique, par exemple la couleur rouge.

Le procédé d'aide à l'atterrissage d'un aéronef peut encore comporter des étapes complémentaires afin que l'aéronef 1 réalise une approche automatique vers une hélisurface 20,25 identifiée, voire un atterrissage automatique sur cette hélisurface 20,25.

Au cours d'une étape de sélection 240, une hélisurface 20,25 est sélectionnée parmi ladite au moins une hélisurface 20,25 identifiée pour réaliser un atterrissage.

Cette sélection peut être faite manuellement par un pilote ou un copilote de l'aéronef 1, par exemple sur l'écran 16 muni d'une dalle tactile ou à l'aide d'un pointeur associé. Cette sélection peut aussi être faite automatiquement, notamment lorsqu'une seule hélisurface 20 est identifiée ou bien lorsqu'il n'y a qu'une seule hélisurface 25 disponible parmi les hélisurfaces 20 identifiées.

Au cours d'une étape de détermination 250, une position relative de l'hélisurface 20,25 sélectionnée est déterminée par rapport à l'aéronef 1.Cette position relative peut être déterminée à l'aide du calculateur spécifique 11, des images captées par le dispositif spécifique de capture d'images 15, et éventuellement des caractéristiques du dispositif spécifique de capture d'images 15 et/ou d'une ou de plusieurs caractéristiques géométriques de l'hélisurface 20,25 sélectionnée.

Au cours d'une étape de détermination 260, une consigne de guidage de l'aéronef vers l'hélisurface 20,25 sélectionnée est déterminée à l'aide du calculateur spécifique 11. Cette consigne est déterminée en fonction de la position relative de l'hélisurface 20,25 sélectionnée et d'une ou de plusieurs lois de pilotage mémorisées, la consigne de guidage étant est transmise au dispositif de pilotage automatique 18.

Au cours d'une étape de guidage automatique 270, une phase d'approche de l'aéronef 1 vers l'hélisurface 20,25 sélectionnée est réalisée automatiquement à l'aide du dispositif de pilotage automatique 18.

Au cours d'une étape finale d'atterrissage automatique 280, un d'atterrissage de l'aéronef 1 peut alors être réalisé sur l'hélisurface sélectionnée de façon automatique l'aide du dispositif de pilotage automatique 18, en appliquant une ou plusieurs lois de pilotage mémorisées.

Le procédé d'aide à l'atterrissage d'un aéronef peut de plus comporter une étape de calcul d'une distance entre chaque hélisurface 20,25 identifiée et l'aéronef 1 et une étape d'affichage de la ou des distances calculées sur le dispositif spécifique d'affichage 14. Chaque distance est calculée par le calculateur spécifique 11 en fonction d'une ou de plusieurs caractéristiques géométriques de cette hélisurface 20,25, des formes géométriques associées à ces caractéristiques géométriques représentées sur ladite au moins une image captée et des caractéristiques du dispositif spécifique de capture d'images 15.

L'intelligence artificielle supervisée destinée à identifier un objet prédéterminé peut aussi être stockée dans la mémoire propre 42 du système 40 d'aide à l'évitement d'un câble avec un aéronef 1 de sorte que ce système 40 mette en œuvre, à l'aide du calculateur propre 41, le procédé d'aide à l'évitement d'un câble avec un aéronef 1 dont un schéma synoptique est représenté sur la figure 5. Ce procédé d'aide à l'évitement d'un câble avec un aéronef 1 comporte plusieurs étapes.

Au cours d'une étape d'acquisition 310, au moins une image d'un environnement de l'aéronef 1 est captée à l'aide du dispositif propre de capture d'images 45.

Ensuite, au cours d'une étape d'identification 320, au moins un câble 30 préalablement connu est identifié dans l'environnement par traitement de ladite au moins une image captée avec l'intelligence artificielle supervisée à l'aide du calculateur propre 41.

De la sorte, l'intelligence artificielle supervisée permet d'identifier automatiquement et rapidement sur les images captées un ou plusieurs câbles présents dans l'environnement de l'aéronef 1, en identifiant le ou les câbles, par exemple des caractéristiques géométriques du ou des câbles, voire des éléments caractéristiques de l'environnement.

Le procédé d'aide à l'évitement d'un câble avec un aéronef peut comporter des étapes supplémentaires.

Par exemple au cours d'une étape d'affichage 325, un symbole 31 d'identification est affiché sur le dispositif propre d'affichage 44 comme représenté sur la figure 6. Le symbole 31 d'identification peut être affiché en superposition de chaque câble 30 identifié sur une image représentant l'environnement de l'aéronef 1 sur l'écran 46 ou bien sur une vue directe de l'environnement sur le dispositif de visualisation 47 du casque 7. De la sorte, le pilote peut visualiser la présence et la position de chaque câble 30 présent devant l'aéronef 1ou à proximité de sa trajectoire. Le symbole 31 d'identification a par exemple une forme allongée suivant le cheminement du câble 30. Sur la figure 6, les câbles 30 identifiée sont situées en haut entre deux pylônes 34.

Le procédé d'aide à l'évitement d'un câble avec un aéronef peut encore comporter des étapes complémentaires afin que l'aéronef 1 réalise une trajectoire évitant si besoin un câble 30 identifié.

Au cours d'une étape de détermination 350, une position de chaque câble 30 identifié est déterminée. Cette position peut être relative à l'aéronef 1 ou absolue dans un repère terrestre par exemple.

Cette position de chaque câble 30 identifié est par exemple déterminée à l'aide du calculateur propre 41, des images captées par le dispositif propre de capture d'images 45, et éventuellement des caractéristiques du dispositif propre de capture d'images 45 et/ou d'une ou de plusieurs caractéristiques géométriques de chaque câble 30 identifié.

Au cours d'une étape de détermination 360, une consigne de guidage permettant à l'aéronef 1 d'éviter chaque câble 30 identifié est déterminée à l'aide du calculateur propre 41. Cette consigne est déterminée en fonction de la position de chaque câble 30 identifié et d'une ou de plusieurs lois de pilotage mémorisées, la consigne de guidage étant transmise au dispositif de pilotage automatique 18.

Au cours d'une étape de guidage automatique 370, l'aéronef 1 peut suivre automatiquement à l'aide du dispositif de pilotage automatique 18 une trajectoire évitant chaque câble 30 identifié en appliquant la consigne de guidage précédemment déterminée.

Le procédé d'aide à l'évitement d'un câble peut de plus comporter une étape de calcul d'une distance entre un ou plusieurs câbles 30 identifiés et l'aéronef 1 et une étape d'affichage de la ou des distances calculées sur le dispositif propre d'affichage 44. Chaque distance est calculée par le calculateur propre 41 en fonction d'une ou de plusieurs caractéristiques géométriques de cette hélisurface 20,25, des formes géométriques associées à ces caractéristiques géométriques représentées sur ladite au moins une image captée et des caractéristiques du dispositif propre de capture d'images 45.

L'aéronef 1 peut évoluer ainsi en sécurité en évitant tout câble identifié par le système 40 d'aide à l'évitement d'un câble avec un aéronef

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé d'apprentissage d'une intelligence artificielle supervisée destinée à identifier un objet prédéterminé (20,30) dans l'environnement d'un aéronef (1) en vol, des caractéristiques géométriques dudit objet prédéterminé (20,30) étant préalablement connues,
**caractérisé en ce que** ledit procédé comporte les étapes suivantes réalisées à l'aide d'un calculateur :
- identification (100) d'au moins un objet prédéterminé (20,30) par traitement de représentations représentant au moins un objet prédéterminé (20,30) et au moins une partie de son environnement, lesdites représentations comportant plusieurs représentations d'un même objet prédéterminé (20,30) avec des valeurs différentes d'au moins un paramètre caractéristique desdites représentations
- établissement (110) d'un jeu d'apprentissage et d'un jeu de validation pour alimenter ladite intelligence artificielle supervisée, comprenant les sous-étapes suivantes :
∘ sélection (115) de plusieurs représentations parmi lesdites représentations pour former ledit jeu d'apprentissage, et
∘ sélection (116) de plusieurs représentations parmi lesdites représentations pour former ledit jeu de validation,
- apprentissage (120) pour l'apprentissage de ladite intelligence artificielle supervisée, en utilisant au moins ledit jeu d'apprentissage et
- validation (130) pour la validation de ladite intelligence artificielle supervisée en utilisant au moins ledit jeu de validation.

2. Procédé selon la revendication 1,
**caractérisé en ce que** ladite étape d'identification (100) d'au moins un objet prédéterminé (20,30) par traitement desdites représentations comporte les sous-étapes suivantes :
- traitement (102) desdites représentations en appliquant une ou plusieurs méthodes de traitement d'une image parmi un filtre de Sobel, une transformée de Hough, la méthode des moindres carrés, la méthode dite « snakes » et la méthode dite « image matching » afin d'identifier au moins une forme géométrique paramétrable,
- identification (103) sur chacune desdites représentations d'au moins un objet prédéterminé (20,30) à l'aide de ladite au moins une forme géométrique, et
- mémorisation (104), pour chacune desdites représentations, de ladite représentation et dudit au moins un objet prédéterminé (20,30) identifié.

3. Procédé selon l'une quelconque des revendications 1 à 2, **caractérisé en ce que** ledit au moins un paramètre caractéristique desdites représentations comporte un ou plusieurs critères parmi un critère d'accumulation desdites représentations, un critère de bruit desdites représentations, un critère de facteur de ressemblance desdites représentations, une distance dudit objet prédéterminé sur lesdites représentations et un angle de vue dudit objet prédéterminé sur lesdites représentations, ladite sous-étape de sélection (115) dudit jeu d'apprentissage étant réalisée selon au moins un paramètre caractéristique desdites représentations.

4. Procédé selon l'une quelconque des revendications 1 à 3, **caractérisé en ce que** ladite étape d'identification (100) d'au moins un objet prédéterminé (20,30) comporte une sous-étape d'étiquetage automatique dudit au moins un objet prédéterminé (20,30), ledit étiquetage dudit au moins un objet prédéterminé (20,30) comportant au moins un paramètre d'étiquetage parmi une forme géométrique dudit au mois un objet prédéterminé (20,30), des paramètres de définition d'une forme géométrique dudit au moins un objet prédéterminé (20,30), des paramètres de positionnement dudit au moins un objet prédéterminé (20,30) et ladite sous-étape de sélection (115) dudit jeu d'apprentissage est réalisée selon au moins un paramètre d'étiquetage.

5. Procédé selon l'une quelconque des revendications 1 à 4, **caractérisé en ce que** lesdites sous-étapes de sélection (115) dudit jeu d'apprentissage et de sélection (116) dudit jeu de validation sont réalisées par sélection aléatoire parmi lesdites représentations, lesdites représentations dudit jeu de validation étant distinctes desdites représentations dudit jeu d'apprentissage.

6. Procédé selon l'une quelconque des revendications 1 à 7, **caractérisé en ce que** lesdites représentations sont limitées à des objets prédéterminés (20,30) situés dans une zone géographique déterminée.

7. Procédé selon l'une quelconque des revendications 1 à 8, **caractérisé en ce que** ladite intelligence artificielle supervisée comporte un réseau de neurones multicouche ou une machine à vecteurs de support.

8. Procédé d'aide à l'atterrissage dudit aéronef (1), ledit aéronef (1) comportant au moins un calculateur spécifique (11) embarqué et au moins un dispositif spécifique de capture d'images (15) relié audit calculateur spécifique (11), ledit procédé étant mis en œuvre par ledit calculateur spécifique (11),
**caractérisé en ce que** ledit procédé comporte les étapes suivantes :
- acquisition (210) d'au moins une image d'un environnement dudit aéronef (1) à l'aide dudit au moins un dispositif spécifique de capture d'images (15), et
- identification (220) d'au moins une hélisurface (20,25) dans ledit environnement par traitement de ladite d'au moins une image avec ladite intelligence artificielle supervisée à l'aide dudit calculateur spécifique (11), ladite intelligence artificielle supervisée étant définie à l'aide dudit procédé d'apprentissage selon l'une quelconque des revendications 1 à 7, ledit objet prédéterminé (20,25) préalablement connu étant une hélisurface (20,25), ladite intelligence artificielle supervisée étant stockée dans une mémoire spécifique (12) reliée audit calculateur spécifique (11).

9. Procédé selon la revendication 8,
**caractérisé en ce que** ledit procédé comporte une étape d'affichage (225), sur un dispositif spécifique d'affichage (14) dudit aéronef (1), d'un premier repère (21) d'identification en superposition de ladite au moins une hélisurface (20,25) identifiée sur une image représentant ledit environnement dudit aéronef (1) ou bien sur une vue directe dudit environnement à travers ledit dispositif spécifique d'affichage (14).

10. Procédé selon l'une quelconque des revendications 8 à 9, **caractérisé en ce que** ledit procédé comporte une étape de détermination (230) d'au moins une hélisurface (25) disponible pour un atterrissage parmi ladite au moins une hélisurface (20) identifiée et une étape d'affichage (235), sur un dispositif spécifique d'affichage (14) dudit aéronef (1), d'un deuxième repère (26) d'identification en superposition de ladite au moins une hélisurface (25) disponible sur une image représentant ledit environnement dudit aéronef (1) ou bien sur une vue directe dudit environnement à travers ledit dispositif spécifique d'affichage (14).

11. Procédé selon l'une quelconque des revendications 8 à 10, **caractérisé en ce que** ledit procédé comporte des étapes supplémentaires suivantes :
- sélection (240) d'une hélisurface (20,25) pour réaliser un atterrissage sur ladite hélisurface (20,25) sélectionnée parmi ladite au moins une hélisurface (20) identifiée,
- détermination (250) d'une position de ladite hélisurface (20,25) sélectionnée,
- détermination (260) d'une consigne de guidage dudit aéronef (1) vers ladite hélisurface (20,25) sélectionnée à l'aide dudit calculateur spécifique (11), et
- guidage automatique (270) dudit aéronef (1) vers ladite hélisurface (20,25) sélectionnée à l'aide d'un dispositif de pilotage automatique (18) dudit aéronef (1).

12. Procédé selon la revendication 11,
**caractérisé en ce que** ledit procédé comporte une étape finale d'atterrissage automatique (280) dudit aéronef (1) sur ladite hélisurface (20,25) sélectionnée.

13. Procédé selon l'une quelconque des revendications 8 à 12, **caractérisé en ce que** ledit procédé comporte une étape de calcul d'une distance entre ladite au moins une hélisurface (20,25) identifiée et ledit aéronef (1), à l'aide dudit calculateur spécifique (11) en fonction d'une ou de plusieurs caractéristiques géométriques de ladite au moins une hélisurface (20,25), des formes géométriques associées audites caractéristiques géométriques représentées sur ladite au moins une image et de caractéristiques dudit dispositif spécifique de capture d'images (15), et une étape d'affichage sur ledit dispositif spécifique d'affichage (14) de ladite distance calculée de ladite au moins une hélisurface (20,25) identifiée.

14. Procédé d'aide à l'évitement d'un câble (30) avec un aéronef (1), ledit aéronef (1) comportant au moins un calculateur propre (41) embarqué et au moins un dispositif propre de capture d'images (45) relié audit calculateur propre (41), ledit procédé étant mis en œuvre par ledit calculateur propre (41),
**caractérisé en ce que** ledit procédé comporte les étapes suivantes :
- acquisition (310) d'au moins une image d'un environnement dudit aéronef (1) à l'aide dudit au moins un dispositif propre de capture d'images (45), et
- identification (320) d'au moins un câble (30) dans ledit environnement par traitement de ladite au moins une image avec ladite intelligence artificielle supervisée à l'aide dudit calculateur propre (41), ladite intelligence artificielle supervisée étant définie à l'aide dudit procédé d'apprentissage selon l'une quelconque des revendications 1 à 7, ledit objet prédéterminé (30) préalablement connu étant un câble (30), ladite intelligence artificielle supervisée étant stockée dans une mémoire propre (42) reliée audit calculateur propre (41).

15. Procédé selon la revendication 14,
**caractérisé en ce que** ledit procédé comporte une étape d'affichage (325), sur un dispositif propre d'affichage (44) dudit aéronef (1), d'un symbole (31) d'identification en superposition dudit au moins un câble (30) identifié sur une image représentant ledit environnement dudit aéronef (1) ou bien sur une vue directe dudit environnement à travers ledit dispositif propre d'affichage (44).

16. Procédé selon l'une quelconque des revendications 14 à 15, **caractérisé en ce que** ledit procédé comporte des étapes supplémentaires suivantes :
- détermination (350) d'une position dudit au moins un câble (30) identifié,
- détermination (360) d'une consigne de guidage dudit aéronef (1) évitant ledit au moins un câble (30) identifié à l'aide dudit calculateur propre (41), et
- guidage automatique (370) dudit aéronef (1) selon ladite consigne de guidage à l'aide d'un dispositif de pilotage automatique (18) dudit aéronef (1).

17. Procédé selon l'une quelconque des revendications 14 à 16, **caractérisé en ce que** ledit procédé comporte une étape de calcul d'une distance entre ledit au moins un câble (30) identifié et ledit aéronef (1), à l'aide dudit calculateur propre (41) en fonction d'une ou de plusieurs caractéristiques géométriques dudit au moins un câble (30), des formes géométriques associées audites caractéristiques géométriques représentées sur ladite au moins une image captée et des caractéristiques dudit dispositif propre de capture d'images (45), et une étape d'affichage sur ledit dispositif propre d'affichage (44) de ladite distance calculée dudit au moins un câble (30).

18. Système (10) d'aide à l'atterrissage d'un aéronef (1), ledit système (10) comportant :
- au moins un calculateur spécifique (11) embarqué,
- au moins une mémoire spécifique (12) reliée audit calculateur spécifique (11), et
- au moins un dispositif spécifique de capture d'images (15) relié audit calculateur spécifique (11),
**caractérisé en ce que** ledit système (10) est configuré pour la mise en œuvre dudit procédé d'aide à l'atterrissage d'un aéronef (1) selon l'une quelconque des revendications 8 à 13.

19. Aéronef,
**caractérisé en ce que** ledit aéronef (1) comporte un système (10) d'aide à l'atterrissage d'un aéronef (1) selon la revendication 18.

20. Système (40) d'aide à l'évitement d'un câble (30) avec un aéronef (1), ledit système (10) comportant :
- au moins un calculateur propre (41) embarqué,
- au moins une mémoire propre (42) reliée audit calculateur propre (41), et
- au moins un dispositif propre de capture d'images (45) relié audit calculateur propre (41),
**caractérisé en ce que** ledit système (40) est configuré pour la mise en oeuvre dudit procédé d'aide à l'évitement d'un câble (30) selon l'une quelconque des revendications 14 à 17.

21. Aéronef (1),
**caractérisé en ce que** ledit aéronef (1) comporte un système (40) d'aide à l'évitement d'un câble (30) par ledit aéronef (1) selon la revendication 21.
